(19) Europäisches Patentamt
European Patent Office
Office européen des brevets

(11) **EP 2 031 423 B1**

(12) **EUROPEAN PATENT SPECIFICATION**

(45) Date of publication and mention
of the grant of the patent:
**15.05.2013 Bulletin 2013/20**

(51) Int Cl.:
**_G01V 11/00_** _(2006.01)_

(21) Application number: **07115430.6**

(22) Date of filing: **31.08.2007**

(54) **Identifying geological features in an image of an underground formation surrounding a borehole**

Identifizierung geologischer Eigenschaften auf einem Bild einer ein Bohrloch umgebenden unterirdischen Formation

Identification de propriétés géologiques dans une image d'une formation souterraine entourant un trou de forage

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**04.03.2009 Bulletin 2009/10**

(73) Proprietors:
• **Services Pétroliers Schlumberger**
  **75007 Paris (FR)**
  Designated Contracting States:
  **FR**
• **Schlumberger Technology B.V.**
  **2514 JG The Hague (NL)**
  Designated Contracting States:
  **BG CZ DE DK GR HU IE IT LT PL RO SI SK TR**
• **Schlumberger Holdings Limited**
  **Road Town, Tortola (VG)**
  Designated Contracting States:
  **GB NL**
• **PRAD Research and Development N.V.**
  **Willemstad, Curacao (AN)**
  Designated Contracting States:
  **AT BE CH CY EE ES FI IS LI LU LV MC MT PT SE**

(72) Inventors:
• **Kherroubi, Josselin**
  **75013, Paris (FR)**
• **Etchecopar, Arnaud**
  **92290, Chatenay-Malabry (FR)**
• **Onda, Hitoshi**
  **75007, Paris (FR)**

(74) Representative: **Vandermolen, Mathieu et al**
**Intellectual Property Department**
**Etudes & Productions Schlumberger**
**1, rue Henri Becquerel**
**B.P. 202**
**92142 Clamart Cedex (FR)**

(56) References cited:
**WO-A-01/84187       US-A- 5 148 494**
**US-A- 5 299 128      US-A1- 2002 087 272**
**US-B1- 6 272 232**

EP 2 031 423 B1

## Description

Technical field

This invention relates to the method to identify fractures from images such as electrical borehole images using a combination of automatic extraction of morphological features and guided classification techniques.

Background art

It is well-known in formation evaluation in the oil and gas industry to make a series of micro-measurements around the circumference of a borehole wall to try to understand the geological structure of the formations through which the borehole is drilled. One example of such a measurement technique is the FMI (Formation Micro Imager) tool of Schlumberger. This tool makes a series of overlapping micro-electrical measurements along the borehole wall, the measurement typically being reconstructed as a greyscale or colour 2D image (essentially an image of the developed, i.e. 'unwrapped', inside surface of the borehole wall). The electrical measurements indicate changes in the electrical properties of the formation and so can help identify structural changes such as boundary beds and fractures. Various software products have been created to aid with interpretation of the reconstructed images derived from such measurements.

In existing interactive borehole image interpretation software, geological features such as sedimentary bed boundaries, faults and fractures are traditionally approximated as a plane. The intersection of a plane with a cylindrical borehole makes a sinusoid pattern on the borehole wall image. Therefore a number of known techniques have focused on the automatic procedures to detect sinusoids from the image. However, fractures observed at the borehole wall are often non planar or partial planes. This non-planar nature is difficult to formulate in mathematical formula to be handled in computer programs. Even for planar features, because fractures are often partial planes and appear in weak contrast, as opposed to bed boundaries or faults, the automatic procedures tend to fail. Because of these difficulties, the users still largely rely on manual picking of fractures. This is time consuming, non-repeatable and not always accurate. Examples of known techniques for interpreting such images can be found in US. Patent No. 5,960,371 U.S. Patent No. 2005/0192753 A1 U.S. Patent No. 6,266,661 U.S. Patent No. 2003/0165256 A1 U.S. Patent No. 5,299,128.

It is desirable to overcome the aforementioned difficulties in order to more accurately identify boundaries, shapes or forms of a geological formation for the improved imaging thereof, for example on a display device.

Disclosure of the invention

This invention provides a method of identifying geological features in an image of an underground formation surrounding a borehole, comprising:

- analysing the image properties to identify image regions based on morphological image properties, and defining segments based on the identified image regions;
- identifying segments corresponding to a group relating to a geological feature; and
- analysing the segments of the group to classify the feature as one of a pre-determined type.

At least one embodiment of the invention advantageously addresses the difficulty of identification of features by adopting a two stage approach including performing morphological operations and segment fitting for image features extraction followed by grouping and classification for identification of the particular geological features.

The definition of segments provides features of the image to which grouping and classification can be applied in a robust manner to identify the features of interest.

Preferably the step of analysing the image to identify image regions comprises identifying regions of high and low contrast in the image.

Preferably wherein the regions identified are thin filament-shaped regions.

The step of defining regions can comprise determining a minimum area for a segment and ignoring any region of area less than this minimum and/or determining a maximum vertical thickness (vertical extent of region) and ignoring any region of thickness greater that this maximum.

The segments are typically analysed to identify breakouts, induced fractures, bedding, natural fractures and/or other isolated features.

A number of techniques are possible to determine parameters of the image segments, including computing the best fit plane for segments (for example determining the best plane estimate based on vectors connecting the extremities of the segments), searching the segments for similar orientations, searching the segments to identify those lying in or near a plane of interest, searching the segments to identify those best fitting a predetermined plane, and searching the segments to identify those lying in a predetermined plane.

It is particularly preferred to use a 2D image of the borehole wall in an interval of the borehole, and a stereonet plot of the interval of the borehole. Comparison of the appearance of segments on the two plots can be used to identify features of interest.

The identified geological features can be represented on the image of the formation.

According to another aspect of the invention there is provided a method of identifying geological features in an image of an underground formation surrounding a borehole, comprising: analysing the image properties to identify image regions, and defining segments based on the identified image regions; identifying segments corresponding to a group relating to a geological feature; analysing the segments of the group to classify the feature as one of a pre-determined type.

Preferably the step of analysing the image properties to identify image regions is based on performing a morphological analysis of the image properties.

According to yet another aspect of the invention there is provided a system of identifying geological features in an image of an underground formation surrounding a borehole, comprising: means for scanning the formation to obtain the image; means for analysing the image properties to identify image regions and defining segments based on the identified image regions; means for identifying segments corresponding to a group relating to a geological feature; means for analysing the segments of the group to classify the feature as one of a pre-determined type; means for displaying the image such that it more closely depicts the formation based on said classification of the feature.

According to yet another aspect of the invention there is provided a method for imaging geological features of an underground formation, the method comprising: scanning the formation for obtaining an image; dividing the image into a plurality of segments representing building blocks that comprise the image; grouping the segments together to be classified into a different geological object; and displaying the image based on the classified geological object.

Brief description of the drawings

Embodiments of the present invention will now be described by way of an example with reference to the accompanying drawings, in which:

Figure 1 shows a flow diagram of the main steps of an embodiment of the invention;
Figures 2a and 2b show a planar fracture classification example on a 2D image display and stereonet plot;
Figures 3a and 3b show a non-planar fracture classification example on a 2D image display and stereonet plot;
Figure 4 shows an image of two intersecting events;
Figure 5 shows an example of a polygonal group;
Figure 6 shows a comparison of a robust best fitting segment and a non-robust best fitting segment in the case of noisy image;
Figure 7 shows images of selected objects; and
Figure 8 shows a basic system according to an embodiment of the present invention.

Mode(s) for carrying out the invention

The method according to the invention is based on a search for finer features, or segments, from the borehole image, as building blocks to form the geological features. These are then grouped together, for example in user guided feature fitting methods, to classify into different geological meaningful terms. This allows characterisation of full or partial planar fractures, drilling induced fractures, other isolated non-planar fractures, as well as larger geological events like faults, bed boundaries and non-conformities.

In the workflow according to a preferred embodiment of the invention, extracted segments, classified objects and groups are displayed on a stereonet plot as well as on top of 2D image display window. The grouping or classification procedure examines the different measures of conditions, such as planarity, symmetry, orientation (localisation on stereonet plot) and the discrimination of features by measurable parameters such as fracture apertures, length, contrast, etc.

One embodiment of the present invention provides a workflow that can be used to perform fracture detection from electrical borehole images.

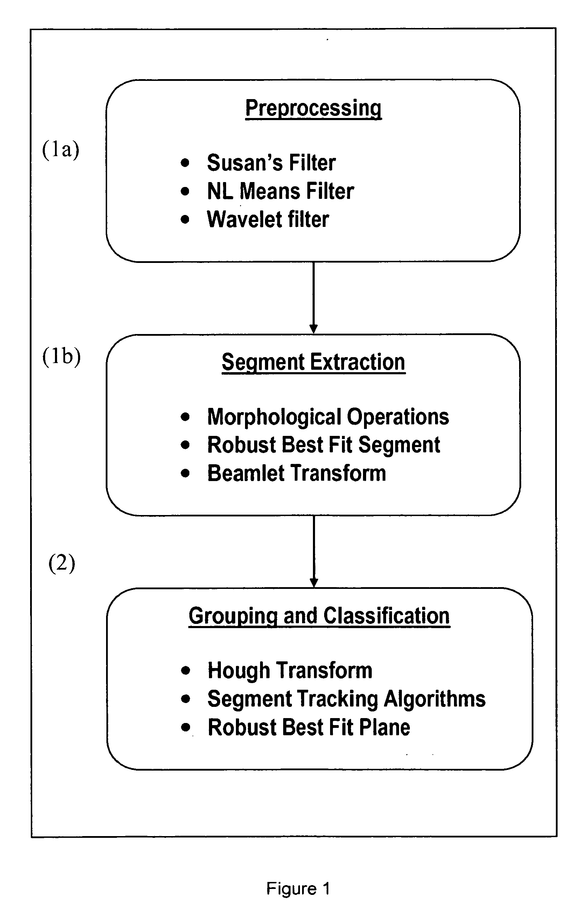

A pre-processing step can be used to eliminate noises from input image (see step (1a) in Figure 1). In the case where the image has speckled aspect (as can happen when a tool such as the FMI is close to saturation), a pre-processing step can be used to improve the results in terms of quality and performance. For this step, a filter such as Susan's filter can be used: a very fast method, which allows the analysed image to be smoothed while preserving edges (S.M. Smith and J.M. Brady, Susan - a new approach to low level image processing, International Journal of Computer Vision, Volume 23 (1), pp. 45-78, 1997. (http://www.fmrib.ox.ac.uk/E;steve/susan/)). Other suitable pre-processing techniques include NL Means Filter and Wavelet Filter.

Segment extraction can be done in a fully automatic manner by a combination of morphologic operations and the Robust Best Fit algorithm (see step (1b) in Figure 1). Alternatively the Beamlet Transform (D.L. Donoho and X. Huo, Beamlets and Multiscale Image Analysis, 2001 (http://www-statstanford.edu/E;donoho/Reports/2001/Beamlet-MSIP051101.pdf)) can be used in place for the Robust Best Fit algorithm.

Segments are the features extracted from input image. Each individual segment can be plotted in a 2D display and on a stereonet display.

In the next step, segments are grouped together and classified into different geological objects (see step 2 of Figure 1). Primary classifications are bed boundaries, planar and non planar fractures, and drilling induced fractures. These classification steps can be based on a set of mathematical algorithms (assisted by user guidance where appropriate). The Segment Tracking Algorithm and the Robust Best Fit algorithm are preferred for this step. Alternatively the Hough Transform (U.S. Patent No. 3,069,654), which is a proven, but computationally intensive, algorithm in dip picking programs can be used to look for planar features.

These algorithms are applied on unclassified segments and groups, based on a specific set of user instructions. An example of such user instruction is to include pre-identified bedding dips as known inputs. Providing the algorithm with known inputs forces it to focus on the segments which do not belong to the known feature. Another example of the user instruction is an interactive selection of dominant orientation of fractures from a stereonet image. This forces the algorithm to look for the segments in a given range of orientations. A user instruction to look for planar fractures with a particular orientation causes the tracking algorithm to eliminate any segments that do not fit in this criteria.

The present invention includes a flexible discrimination procedure. Any quantitative attribute computed on extracted segments can be used as a discriminator. Aperture, length, contrast (electrical resistivity values, etc.) can be combined for the fracture classification criteria.

The classification step (2) is applied repeatedly. It is a 'Cleaning' methodology. As the number of unclassified segments and groups reduces after each iteration, the grouping and classification become faster and easier.

In summary, the present invention provides a method that can incorporate a number of new features, including:

- New representation of fractures (or other geological features) as a set of segments
- Automatic feature/segment extraction from the images including, for example, steps of:

    o Use of noise filters, Susan filter, etc. (optional)
    o Image flattening using a priori bedding information (optional)
    o Specialized mathematical morphology operators
    o Binarization of image
    o Robust Best Fit algorithm for polyline fitting (segment extraction)

- Semi-automatic, i.e. user guided, algorithms in the workflow to group and classify segments to geological events including, for example, the following sub-tasks:

    o Compute a best fit plane from input segments
    o Find a group of segments with similar orientation as input segments
    o Find a group of segments with similar orientation as an input plane
    o Find a best fit plane with similar orientation as input segments
    o Find a group of best fit planes with similar orientation as an input plane
    o Find a group of best fit planes with similar orientation (no input)

- Flexible discrimination of segments can be applied in both segment extraction and segment classification steps, for example:

    o By screening out a priori features belong to already known events such as beddings
    o By filtering using variety of attributes such as aperture, length, etc.

- Cleaning methodology to analyze image features in repeated manner
- Reduce time to pick fractures
- Improve accuracy and repeatability of fracture picking, by eliminating fully manual fracture picking workflow of existing techniques
- Improve consistency of fracture detection between wells by use of measurable discrimination parameters such as fracture aperture.

The present invention provides a method that can embody a workflow comprising automatic extraction of image segments and user guided classification of extracted segments to geological entities.

A fracture can be defined as a polygonal line - or group of segments - or as a group of vectors. When defined as a group of vectors, information of depth and azimuth coordinate of the extremity points is lost but the advantage is that it is now possible to display them in a stereonet plot.

Throughout the workflow, two basic presentations of fracture segments are available for the user to visualization, interaction, classification and validation. The 2D image display view is a primary tool for borehole image interpretation. The stereonet plot view is useful to grasp orientation and distribution of fracture segments. User guidance, to choose and manipulate a segment or group of segments, is done through these two views.

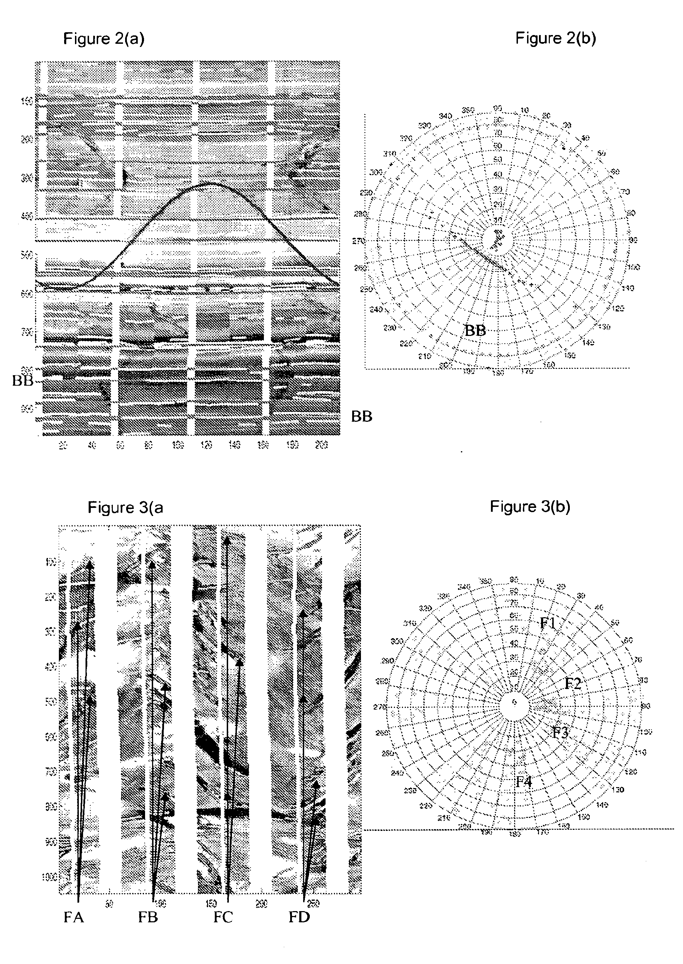

Figures 2a and 2b show a planar fracture classification example on a 2D image display (Figure 2a) and stereonet plot (Figure 2b) (in normal situations, the 2D image display is presented as a greyscale or colour intensity image with defined features superposed in a different colour or contrasting intensity; corresponding contrasting colours or intensities are plotted for the same features on the stereonet image). In this example, the segments plotted as light shading lines (see segments BB on Figures 2a and 2b) come from a pre-defined set of bed boundary features. This illustrates how the proposed workflow makes it easier to highlight the rest of events including fractures.

Figures 3a and 3b show a non-planar fracture classification example on a 2D image display (Figure 3a) and stereonet plot (Figure 3b). It exhibits a good case that what the traditional sinusoid based picking cannot succeed. The segment-based approach of the present invention can group and highlight these non-planar features, with the help of the stereonet plot. For example, the grouped segments F1, F2 and F3 of the stereonet plot (Figure 3b) can be used to identify respectively to the features FA, and FC of the 2D image (Figure 3a) which otherwise would be difficult or impossible to discriminate from other, unrelated features of the image.

These two examples illustrate one level of a cleaning methodology. The proposed invention allows multiple levels of classification steps in a repeated manner by which the degree of unknowns, i.e. a number of unclassified segments, is reducing and the problem solving is getting easier and faster.

A number of algorithms can be used in the present invention, examples of which are discussed below.

Pre-processing algorithms, such as Susan's filter are discussed above.

For segment extraction, a number of criteria are available with choices of operations, including:

- Fractures (and other features of interest) may have very high intensity or low intensity in the image compared to its neighbourhood

    o Apply morphology operations to extract high intensity contrast groups of pixels from the image.

- A feature of interest may have a minimum area (to remove the isolated small group of pixels) and a maximum vertical thickness (vertical extent)

    o Label the connected groups of pixels and remove the small area groups and the group, whose vertical extent is too high.

- A feature of interest may have a thin shape (e.g. fractures can be modelled as a polygonal line/segment chain)

    o Search polygonal lines (segment group) contained in each feature, measure each segment thickness.

The basic segment extraction operations are based on a mathematical morphology analysis of the image. Mathematical morphology is a nonlinear theory, which provides a tool for investigating geometric structure in binary and greyscale images. Its objective is to analyze objects in the image according to their shape, their size, their neighbourhood relationship, and their grey scale values. The morphology analysis is extremely efficient to solve problems which require shape analysis with speed constraints.

The morphology operations are first based on designing a structural element with specific shape, size and origin. Erosion and dilation operators can then be defined as the most elementary operators. Finally, more complicated morphological operators can be designed by means of combining erosions and dilations.

A pixel image can be defined as a function:

$$(i,j) \in [1,n] \times [1,m] \rightarrow I(i,j) \in [0, MAX],$$

where n is the row number, m the column number, and MAX the maximum pixel value. For the purposes of this example a structural element B is defined.

A dilation operator can be defined:

$$D(I)(i, j) = \sup_{(x,y) \in B} \{I(i - x, i - y)\}$$

Taking a disk as the structural element, the dilation operator has the property to extend the size of the objects in accordance with the disk diameter, to link objects whose separation is less than the disk diameter, and to fill holes whose size is less than the disk diameter.

An erosion operator can be defined:

$$E(I)(i, j) = \inf_{(x,y) \in B} \{I(i - x, i - y)\}$$

Again taking a disk shape as the structural element, the dilation operator has the property to decrease the size of the objects in accordance with the disk diameter, to erase closely connected objects, whose size is less than the disk diameter and to separate objects linked by an "isthmus", whose thickness is less than the diameter.

An opening operator, comprising a combination of erosion and dilation operators, can be defined:

$$O(I)(i, j) = (D \circ E(I))(i, j)$$

Objects whose size is less than the structural element size are erased and excrescences which are too thin to contain the structural element are suppressed. The size of the object is not reduced as this is the function of the erosion operator.

A closing operator, comprising a combination of dilation and erosion operators, is defined:

$$C(I)(i, j) = (E \circ D(I))(i, j)$$

The closing operator fills holes whose size is less than the structural element size and smoothes objects by adding points in thin concavities (those which cannot contain the structural element).

An adapted operator for the automatic feature extraction for feature characterisation purposes can be defined:

$$I_{out}(i, j) = I(i, j) - \min(I(i, j), (O \circ C(I))(i, j))$$

In a first step of an embodiment of the invention, a closing operation is used to fill the holes and link the high contrast features. In a second step, an opening operation removes the small high contrast features. By taking the minimum between the resulting image and the initial image, it is possible to avoid artificially linked regions, which do not correspond to a single geological feature. Extraction is then performed by computing the residue between the resulting image and the initial image.

In the present invention, an adapted structural element is preferably used. In a general case, all the events in an image must be extracted.

Taking a vertical line as a basic structural element has certain preferable features:

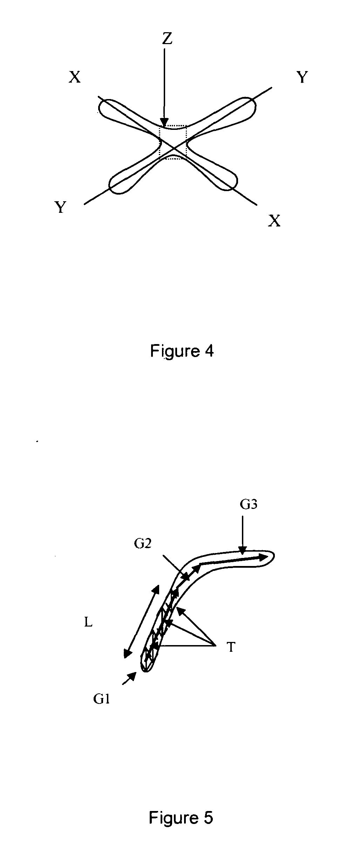

- Images of the type addressed by the present invention are typically made using a tool with an array of small, 'button' sensors (e.g. electrodes) on a pad that is pressed against the borehole wall as the tool is logged up the well. Therefore, a contrast measurement along a vertical line can come from the same button sensor and so does not suffer from calibration problems affecting measurements within that element/line.
- As the geological events of interest are generally represented as a function of the azimuth in a specific interval (straight line, or partial sinusoid), extracting the points or at least thin features along the depth gives one depth for one azimuth.
- In the case of intersecting geological events, the use of vertical elements allows the event to be split into independent groups to avoid mistakes in the grouping step (different geological events must belong to distinct groups). The size of the structural element of interest is based on the maximum (vertical) thickness to be extracted from the image. A default maximum thickness of ten pixels (corresponds to 2.5cm in the case of FMI image) is proposed but may be changed according to the nature of the image and the measurement technique. Elements above this thickness can be removed. Figure 4 shows an image of two intersecting events indicated generally by lines X-X and Y-Y. The central region Z formed by the intersection of the two lines exceeds the maximum thickness and so is removed. Thus the subelements relating to event X-X are separated from the events relating to event Y-Y.

Structural elements can be chosen based on a priori information. The basic structural element in the image is a line, whose slope depends on various factors. By providing this a priori information, segments of specific type can be extracted from the image:

- Where bedding dips have been previously identified, to remove the bedding in the segment extraction step, the image is flattened and a horizontal line used as structural element.
- Where segment orientations have been picked manually, and the user wants to extract these orientations, each picked segment defines an orientation and an azimuth interval. For each orientation, a line which is perpendicular to this orientation is used. The morphology operations are only applied on picked azimuth intervals. Each orientation gives one output image. The single output image is the maximum of all the output images.
- Where segment orientations have been picked manually, and the user wants to extract segments other than these orientations, again each picked segment defines an orientation and an azimuth interval. For each orientation, a line which is parallel to this orientation is used. The morphology operations are only applied on picked azimuth intervals. Each orientation gives an output image. The single output image is the maximum of all the output images.

For each case, the size of the structural element depends on the fracture maximum vertical thickness to be detected.

At the end of this step a new binary output image is created. If the background conductivity is given as a priori data, this is used as threshold in order to build the binary image. Otherwise, the highest values of the output image (typically 20 percent of the highest values) are selected as the threshold.

To extract the low intensity contrast features, for example when analysing an image of conductive and restive fractures, the opposite (negative) image is computed and the same operations are used.

Representing and exporting the groups is based on the extraction of polygonal lines from the image. The group is represented as a polygonal line having specific properties:

- Pixel values: intensity distribution, variance; and
- For each segment in the group: index, length, orientation (for each segment seen as a vector in the 3D space), thickness, and aperture.

This representation allows the user:

- To have very accurate statistics about the geological events and a better analysis. The aperture is particularly suited to find eventual azimuth anisotropy - influence of the drilling induced stress - or to provide information about fracture type.
- To filter the group according to user-selected rules. Typically, the user can apply a threshold on one of the previous properties to select the groups of interest.

In order to extract the polygonal, two different processes are needed:

- a splitting strategy to divide the different pixel groups in several straight line groups; and
- a best fitting segment method to find the segment for each group forming a straight line.

In order to build polygonal line, each group is divided into several subgroups. One way to do this is to scan the object from left to right. A part of the group is extracted as soon as this part has a length much higher than the measured thickness (for example, when the length of the part is exceeds 1.5 times the thickness). The measured thickness is the mean thickness of the group along the vertical direction. The length is the Cartesian norm joining both extreme points.

Figure 5 shows an example of a polygonal group. The average thickness of the group in the vertical direction (shown as individual measurements T in Figure 5) is determined ('measured thickness'). The group is scanned from left to right until a sub-group G1 is detected which exceeds the measured thickness by the predetermined amount. The length L is the distance between the extremities of this sub-group. The other sub-groups G2 and G3 are similarly defined and together with G1 define the polygonal line.

The preferred processing uses a robust best fitting segment algorithm such as an M-estimator with a Tukey's biweight function (see J.W. Tukey, Exploratory Data Analysis. Addison-Wesley, 1977; and S.Z. Li, Markov Random Field - Modeling in Computer Vision, Springer-Verlag 1995, Chapter 4. "Discontinuity-Adaptively Model and Robust Estimation" (http://www.cbsr.ia.ac.cn/users/szli/MRF_Book/Chapter_4/node68.html))/

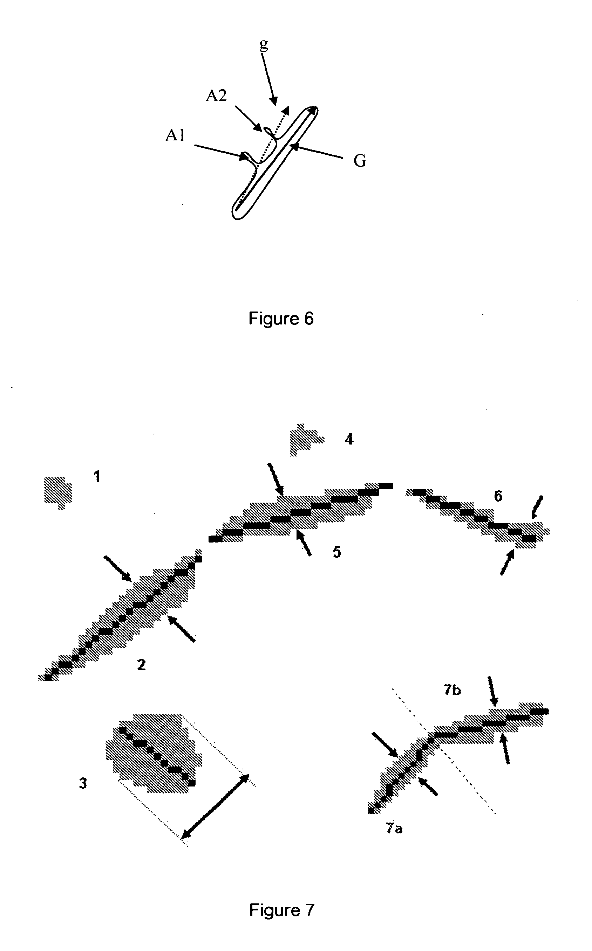

The robust best fitting segment can be very efficient in case of noisy image such as that shown in Figure 6. In this image, a main straight line group M has irregular image artefacts A1 and A2 on one side. When analysing this image using a non-robust best fitting segment, the group is defined as the dashed line g. However, when using the robust best fitting segment, the sub-group G is determined, ignoring the artefacts A1 and A2.

The robust best fitting takes a maximum error as input (for classifying into inlier and outlier families): the thickness used in morphology operations is taken as input parameter.

Figure 7 illustrates the final result. The morphology operations has selected the objects 1 E; 7. Among these, the objects 1 and 4 are rejected from consideration as failing the minimum area test. Object 3 is rejected as failing the maximum thickness test. This leaves objects 2, 5, 6 and 7 as potential building blocks, i.e. segments, for grouping and classification. The object 7 is further divided into 7a and 7b.

After extracting the segments from the image, next step is to group and classify them as fractures and other geological objects. A cleaning methodology can be used to extract the fractures and other features by switching between coarse and fine analysis and applying rules to distinguish and finally pick the following main groups of events from the image:

- Breakouts
- Induced fractures (non-planar)
- Bedding (planar)
- Natural fractures (full or partial plane)
- Other isolated fractures (mostly non-planar)

Beddings normally have well defined shapes, i.e. sinusoids, and are first extracted or may be pre-identified (a priori data) before the analysis described above is applied. Although breakouts and induced fractures do not have well defined shapes, they are relatively easy to distinguish from other events. Therefore, if their presence is obvious, the segments belonging to these types are next targets to be grouped and classified by this procedure.

The remaining events in the image are either fractures or unexploitable events and may require the final judgment by the user.

The present invention provides the tools that allow the user to perform the cleaning process more quickly. With reliable dip picking software (for example using Hough Transform-based semi-automatic sinusoid picking) the bedding can be used as a priori information.

By representing the segments in 2D image and stereonet view at the same time, the complementarity of these representations is exploited in order to improve the diagnosis. The stereonet view is a useful tool for the geologist: it offers a synthetic orientation distribution display and consequently a new means to extract interesting events in the borehole images.

Table 1 below summarises how we can recognize feature types in both 2D image and stereonet view, for different type of events.

Table 1

| Family Name Heterogeneity | Event Type Unknown | Geometry on 2D Image Segment | Geometry on Stereonet Point |
|---|---|---|---|
| Sedimentary Surface | Bedding | Segments with sinusoid shape | Points with great circle shape |
| Planar Fracture | Fracture | Segments with sinusoid shape | Points with great circle shape |
| Partial Planar Fracture | Fracture | Segments with partial sinusoid shape | Points with partial great circle shape |
| Non Planar Fracture | Fracture | Segments with no specific shape | Points with no specific shape |
| Induced Fracture | Fracture | Segments with same orientation | Points concentrated in a small area |

The present invention preferably utilises six basic algorithms to compute the various attributed of the features of interest.

Algorithm 1: computation of the best fit plane (segment as input(s))

The present invention provides a tool which takes into account the uncertainty along the vertical axis (thickness). Each segment has two extremity points. Considering that any vector joining one input point to another input point belongs to the best fit plane, the 80% highest dip couples are taken and a robust estimator with Tukey's biweight function applied to find the best plane orientation. Removing the outlier vectors and knowing the orientation of the plane, the depth for each remaining point is computed and the mean taken as plane depth.

Algorithm 2: search similar orientation segment (for segment(s) input)

For given segment(s), all the segments parallel or near parallel to the input segment can be searched by evaluating and analysing the scalar product. This algorithm is useful in the case where the induced fractures need to be easily removed.

Algorithm 3: search similar orientation segment (for plane input)

For given segment(s), all the segments parallel or near parallel to the input segment can be searched by dividing the input plane into several segments and applying the previous algorithm. This algorithm is useful in the case bedding needs to be removed easily.

Algorithm 4: Search similar orientation best fit plane (for segment(s) input)

For given segment(s), a tracking algorithm is applied:

- The track starts with the input segment(s) and the algorithm progressively finds segment(s) feeding the track
- A sinusoid model is used, Algorithm 1 being used to compute the sinusoids
- A new definition is made of the error between a sinusoid and a segment.

A tree with the most likely tracks is then built. Finally, the best track is selected as an output.

Algorithm 5: search for similar planes (planes as input)

First, select the segments with same orientation as the input plane (Algorithm 3). For each segment, a probability of taking part of the plane is computed (Gaussian distribution over difference angle between input plane and segment). For a given plane orientation, only the depth is missing to define the plane. A depth is computed for each selected segment (for both extremities of the segment the depth is computed and then the mean of both depths is computed). In the case of a group of segment, the resulting depth is the normalized weighted sum of each segment contained in the group (the weight corresponds to the probability of taking part of the plane). In the next step, the segments are clustered according to their depth. Only the clusters with the highest azimuthal coverage are selected. Finally, the best fit plane is computed for each selected cluster (Algorithm 1).

Algorithm 6: search for similar planes (nothing as input)

If there is no input, the algorithm finds the best orientation, using the vector rather than the segment representation. The robust best fit plane is used, which gives as output the best orientation and the outliers. The previous algorithm with this best orientation as input is then used.

This is closer to the way how geologists analyze geological features on borehole images.

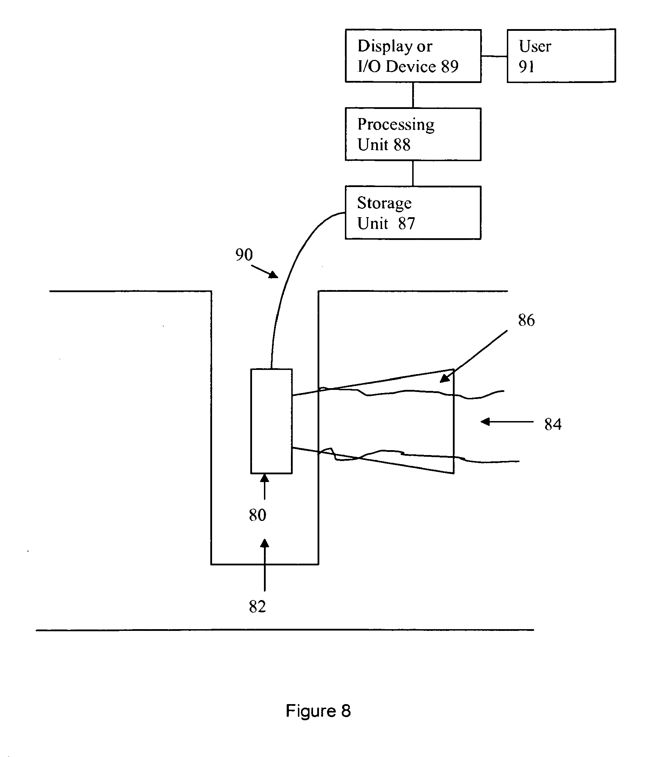

Figure 8 shows a system for carrying out the invention according to one embodiment. Specifically, there is shown a borehole 82 drilled downhole into the ground. A scanning or imaging tool 80 is moveably located downhole for scanning the surrounding formation. It should be understood that the imaging tool could form part of a standalone sonde device or could form part of a drill collar apparatus (not shown), which apart from drilling has various other sensors and control for carrying out other operations. The imaging tool 80 is able to scan 86 the formation 84 and to recover data of the formation which contributes to an image of that formation. It should be appreciated that said image data can either be processed downhole or within the imaging tool 80 or on the surface, where it can be stored in a memory device 87.

The memory 87 can store data or indeed a plurality of algorithms (best-fit) that can be accessed and used by a processing unit 88. A user 91 is able to interact with the system via an I/O device 89, such as a display for viewing the image and a keyboard for selecting various parameters and algorithms for interacting with the display and rendering of the image.

It should also be appreciated that although a wire link 90 is shown between the imaging tool 80 and the storage unit, there could be a wireless connection with the surface, for example mud telemetry. Moreover, the I/O device 89, processing unit 88 and storage unit 87 all represent functionality that may be distributed or grouped into a single device, i.e. surface PC, or hardware module integrated downhole within the image tool 80 itself.

**Claims**

1.  A method of identifying geological features in an image of an underground formation surrounding a borehole, comprising;
    analyzing the image to identify a plurality of image regions of the image;
    extracting, for each image region, a plurality of segments defining a polyline fitting of each image region;
    extracting from each segment a parameter; and
    classifying the segments into groups based on the parameter such that the segments in each group correspond to a geological feature.

2.  A method as claimed in claim 1, wherein the step of analyzing the image properties to identify image regions is based on performing a morphological analysis of the image properties.

3.  A method as claimed in claim 1 or 2, wherein the step of analyzing the image to identify image regions comprises identifying regions of high and low contrast in the image.

4.  A method as claimed in claim 3, wherein the identified regions are thin filament-shaped regions.

5.  A method as claimed in any preceding claim, wherein the step of defining segments comprises determining a minimum area for a region and ignoring any region of area less than this minimum.

6.  A method as claimed in any preceding claim, wherein the step of defining segments comprises determining a maximum thickness for a region and ignoring any region of area greater than this maximum.

7.  A method as claimed in any preceding claim, comprising analysing the segments to identify breakouts, induced fractures, bedding, natural fractures, and/or other isolated features.

8.  A method as claimed in any preceding claim, comprising computing the best fit plane for segments.

9.  A method as claimed in claim 8, comprising determining the best plane estimate based on vectors connecting the extremities of the segments.

10.  A method as claimed in any preceding claim, comprising searching the segments for similar orientations.

11.  A method as claimed in any preceding claim, comprising searching the segments to identify those lying in or near a plane of interest.

12.  A method as claimed in any preceding claim, comprising searching the segments to identify those best fitting a predetermined plane.

13.  A method as claimed in any preceding claim, comprising searching the segments to identify those lying in a predetermined plane.

14.  A method as claimed in any preceding claim, computing using a 2D image plot of the borehole in an interval of the borehole and a stereonet plot of the interval of the borehole.

15.  A method as claimed in claim 13, comprising comparing the appearance of the segments of the 2D image plot and the stereonet plot to identify features of interest.

**16.** A method as claimed in any preceding claim, comprising representing the geological features on the image of the formation.

**17.** A method as claimed in any preceding claim, comprising applying a cleaning methodology to analyse image features in a repeated manner.

**18.** A method as claimed in any preceding claim, comprising discriminating between segments on the basis of numerical criteria of length, aperture of other features computed in the attributes of each segment.

**19.** A method as claimed in any preceding claim, further comprising:

scanning the formation for obtaining an image;
dividing the image into a plurality of segments representing building block that comprise the image;
grouping the segments together to be classified into a different geological object;
displaying the image based on the classified geological object.

**20.** A method as claimed in claim 19, wherein the step of grouping the segments together is performed by a user that is able to select from a plurality of fitting algorithms.

**21.** A method as claimed in claim 20, wherein the user is able to program a fitting algorithm that groups the segments having a similar orientation.

**22.** A method as claimed in any of claims 19 to 21, wherein the geometrical object is at least one of a full or partial planar fracture, a drilling induced fracture, an isolated nonplanar fracture, as well as larger geological events like faults, bed boundaries and nonconformities.

**23.** A system of identifying geological features in an image of an underground formation surrounding a borehole, comprising:

means for scanning the formation to obtain the image;
means for analysing the image to identify a plurality of image regions;
means for extracting, for each image region, a plurality of segments defining a polyline fitting of the image region;
means for extracting from each segment a parameter; and
means for classifying the segments into groups based on the parameter such that the segments in each group correspond to a geological feature.

**Patentansprüche**

**1.** Verfahren zum Identifizieren geologischer Merkmale in einem Bild einer ein Bohrloch umgebenden unterirdischen Formation, das umfasst:

Analysieren des Bildes, um mehrere Bildbereiche des Bildes zu identifizieren;
Extrahieren mehrerer Segmente für jeden Bildbereich, die eine Polylinien-Anpassung jedes Bildbereichs definieren;
Extrahieren eines Parameters aus jedem Segment; und
Klassifizieren der Segmente in Gruppen anhand des Parameters, derart, dass die Segmente in jeder Gruppe einem geologischen Merkmal entsprechen.

**2.** Verfahren nach Anspruch 1, wobei der Schritt des Analysierens der Bildeigenschaften, um Bildbereiche zu identifizieren, auf der Ausführung einer morphologischen Analyse der Bildeigenschaften beruht.

**3.** Verfahren nach Anspruch 1 oder 2, wobei der Schritt des Analysierens des Bildes, um Bildbereiche zu identifizieren, das Identifizieren von Bereichen mit hohem und niedrigem Kontrast in dem Bild umfasst.

**4.** Verfahren nach Anspruch 3, wobei die identifizierten Bereiche dünne filamentförmige Bereiche sind.

**5.** Verfahren nach einem vorhergehenden Anspruch, wobei der Schritt des Definierens von Segmenten das Bestimmen eines minimalen Flächeninhalts für einen Bereich und das Ignorieren irgendeines Bereichs mit einem Flächeninhalt, der kleiner als dieses Minimum ist, umfasst.

6. Verfahren nach einem vorhergehenden Anspruch, wobei der Schritt des Definierens von Segmenten das Bestimmen einer maximalen Dicke für einen Bereich und das Ignorieren irgendeines Bereichs mit einem Flächeninhalt, der größer als dieses Maximum ist, umfasst.

7. Verfahren nach einem vorhergehenden Anspruch, das das Analysieren der Segmente, um Ausbrüche, induzierte Zerklüftungen, Einbettungen, natürlicher Zerklüftungen und/oder andere isolierte Merkmale zu identifizieren, umfasst.

8. Verfahren nach einem vorhergehenden Anspruch, das das Berechnen der bestangepassten Ebene für Segmente umfasst.

9. Verfahren nach Anspruch 8, das das Bestimmen der Bestebenenschätzung anhand von Vektoren, die die Enden der Segmente verbinden, umfasst.

10. Verfahren nach einem vorhergehenden Anspruch, das das Suchen der Segmente für ähnliche Orientierungen umfasst.

11. Verfahren nach einem vorhergehenden Anspruch, das das Suchen der Segmente, um jene zu identifizieren, die in einer interessierenden Ebene oder in deren Nähe liegen, umfasst.

12. Verfahren nach einem vorhergehenden Anspruch, das das Suchen der Segmente, um jene zu identifizieren, die am besten zu einer vorgegebenen Ebene passen, umfasst.

13. Verfahren nach einem vorhergehenden Anspruch, das das Suchen der Segmente, um jene zu identifizieren, die in einer vorgegebenen Ebene liegen, umfasst.

14. Verfahren nach einem vorhergehenden Anspruch, wobei das Berechnen eine zweidimensionale Bildauftragung des Bohrlochs in einem Intervall des Bohrlochs und eine Stereonetz-Auftragung des Intervalls des Bohrlochs verwendet.

15. Verfahren nach Anspruch 13, das das Vergleichen des Erscheinungsbildes der Segmente der zweidimensionalen Bildauftragung und der Stereonetz-Auftragung, um interessierende Merkmale zu identifizieren, umfasst.

16. Verfahren nach einem vorhergehenden Anspruch, das das Darstellen der geologischen Merkmale in dem Bild der Formation umfasst.

17. Verfahren nach einem vorhergehenden Anspruch, das das wiederholte Anwenden einer Reinigungsmethodik, um Bildmerkmale zu analysieren, umfasst.

18. Verfahren nach einem vorhergehenden Anspruch, das das Unterscheiden zwischen Segmenten anhand numerischer Kriterien der Länge und der Öffnung anderer Merkmale, die in den Attributen jedes Segments berechnet werden, umfasst.

19. Verfahren nach einem vorhergehenden Anspruch, das ferner umfasst:

   Abtasten der Formation, um ein Bild zu erhalten;
   Unterteilen des Bildes in mehrere Segmente, die Baublöcke repräsentieren, die das Bild enthalten;
   Gruppieren der Segmente miteinander, um in ein unterschiedliches geologisches Objekt klassifiziert zu werden;
   Anzeigen des Bildes anhand des klassifizierten geologischen Objekts.

20. Verfahren nach Anspruch 19, wobei der Schritt des Gruppierens der Segmente miteinander von einem Anwender ausgeführt wird, der aus mehreren Anpassungsalgorithmen wählen kann.

21. Verfahren nach Anspruch 20, wobei der Anwender einen Anpassungsalgorithmus programmieren kann, der die Segmente mit ähnlicher Orientierung gruppiert.

**22.** Verfahren nach einem der Ansprüche 19 bis 21, wobei das geometrische Objekt eine vollständige oder teilweise ebene Zerklüftung und/oder eine durch Bohren induzierte Zerklüftung und/oder eine isolierte, nicht ebene Zerklüftung sowie größere geologische Ereignisse wie etwa Bruchlinien, Lagerstättengrenzen und Nichtkonformitäten umfasst.

**23.** System zum Identifizieren geologischer Merkmale in einem Bild einer ein Bohrloch umgebenden unterirdischen Formation, das umfasst:

Mittel, um die Formation abzutasten, um das Bild zu erhalten;
Mittel zum Analysieren des Bildes, um mehrere Bildbereiche zu identifizieren;
Mittel zum Extrahieren mehrerer Segmente, die eine Polylinienanpassung des Bildbereichs definieren, für jeden Bildbereich;
Mittel zum Extrahieren eines Parameters aus jedem Segment; und
Mittel zum Klassifizieren der Segmente in Gruppen anhand des Parameters, derart, dass die Segmente in jeder Gruppe einem geologischen Merkmal entsprechen.

**Revendications**

**1.** Procédé d'identification de caractéristiques géologiques dans une image d'une formation souterraine entourant un trou de forage, comprenant :

l'analyse de l'image pour identifier une pluralité de régions d'image de l'image;
l'extraction, pour chaque région d'image, d'une pluralité de segments définissant un ajustement de polyligne de chaque région d'image;
l'extraction d'un paramètre de chaque segment; et
la classification des segments en groupes en se basant sur le paramètre de telle sorte que les segments de chaque groupe correspondent à une caractéristique géologique.

**2.** Procédé selon la revendication 1, dans lequel l'étape d'analyse des propriétés d'image pour identifier des régions d'image est basée sur la réalisation d'une analyse morphologique des propriétés d'image.

**3.** Procédé selon la revendication 1 ou 2, dans lequel l'étape d'analyse de l'image pour identifier des régions d'image comprend l'identification de régions de contraste élevé et faible dans l'image.

**4.** Procédé selon la revendication 3, dans lequel les régions identifiées sont de fines régions filamentaires.

**5.** Procédé selon l'une quelconque des revendications précédentes, dans lequel l'étape de définition de segments comprend la détermination d'une aire minimale pour une région et la non-prise en compte de toute région d'aire inférieure à ce minimum.

**6.** Procédé selon l'une quelconque des revendications précédentes, dans lequel l'étape de définition de segments comprend la détermination d'une épaisseur maximale pour une région et la non-prise en compte de toute région d'aire supérieure à ce maximum.

**7.** Procédé selon l'une quelconque des revendications précédentes, comprenant l'analyse des segments pour identifier des délestages, des fractures induites, des stratifications, des fractures naturelles et/ou d'autres caractéristiques isolées.

**8.** Procédé selon l'une quelconque des revendications précédentes, comprenant le calcul du plan de meilleur ajustement pour des segments.

**9.** Procédé selon la revendication 8, comprenant la détermination de l'estimée de meilleur plan en se basant sur des vecteurs raccordant les extrémités des segments.

**10.** Procédé selon l'une quelconque des revendications précédentes, comprenant la recherche d'orientations similaires dans les segments.

**11.** Procédé selon l'une quelconque des revendications précédentes, comprenant la recherche dans les segments pour identifier ceux se trouvant dans ou à côté d'un plan d'intérêt.

12. Procédé selon l'une quelconque des revendications précédentes, comprenant la recherche dans les segments afin d'identifier les segments de meilleur ajustement à un plan prédéterminé.

13. Procédé selon l'une quelconque des revendications précédentes, comprenant la recherche dans les segments pour identifier ceux se trouvant dans un plan prédéterminé.

14. Procédé selon l'une quelconque des revendications précédentes, comprenant le calcul en utilisant un graphe d'image en 2D du trou de forage dans un intervalle du trou de forage et un graphe stéréographique tournant de Wulff de l'intervalle du trou de forage.

15. Procédé selon la revendication 13, comprenant la comparaison de l'apparence des segments du graphe d'image en 2D et du graphe stéréographique tournant de Wulff pour identifier des caractéristiques d'intérêt.

16. Procédé selon l'une quelconque des revendications précédentes, comprenant la représentation des caractéristiques géologiques sur l'image de la formation.

17. Procédé selon l'une quelconque des revendications précédentes, comprenant l'application d'une méthodologie de nettoyage pour analyser des caractéristiques d'image de façon répétée.

18. Procédé selon l'une quelconque des revendications précédentes, comprenant la discrimination entre des segments sur la base de critères numériques de longueur, d'ouverture d'autres caractéristiques calculées dans les attributs de chaque segment.

19. Procédé selon l'une quelconque des revendications précédentes, comprenant en outre :

le balayage de la formation pour obtenir une image;
la division de l'image en une pluralité de segments représentant un bloc fonctionnel qui comprennent l'image;
le regroupement des segments afin qu'ils soient classés dans un objet géologique différent;
l'affichage de l'image en se basant sur l'objet géologique classé.

20. Procédé selon la revendication 19, dans lequel l'étape de regroupement des segments est réalisée par un utilisateur qui est capable de choisir parmi une pluralité d'algorithmes d'ajustement.

21. Procédé selon la revendication 20, dans lequel l'utilisateur est capable de programmer un algorithme d'ajustement qui regroupe les segments ayant une orientation similaire.

22. Procédé selon l'une quelconque des revendications 19 à 21, dans lequel l'objet géométrique est au moins l'une d'une fracture plane complète ou partielle, d'une fracture induite par forage, d'une fracture non plane isolée, ainsi que d'événements géologiques plus importants tels que des failles, des limites de couche et des non-conformités.

23. Système d'identification de caractéristiques géologiques dans une image d'une formation souterraine entourant un trou de forage, comprenant :

un moyen permettant de balayer la formation afin d'obtenir l'image;
un moyen permettant d'analyser l'image afin d'identifier une pluralité de régions d'image;
un moyen permettant d'extraire, pour chaque région d'image, une pluralité de segments définissant un ajustement de polyligne de la région d'image;
un moyen permettant d'extraire un paramètre de chaque segment; et
un moyen permettant de classer les segments en groupes en se basant sur le paramètre de telle sorte que les segments dans chaque groupe correspondent à une caractéristique géologique.

(1a)

**Preprocessing**

- **Susan's Filter**
- **NL Means Filter**
- **Wavelet filter**

(1b)

**Segment Extraction**

- **Morphological Operations**
- **Robust Best Fit Segment**
- **Beamlet Transform**

(2)

**Grouping and Classification**

- **Hough Transform**
- **Segment Tracking Algorithms**
- **Robust Best Fit Plane**

Figure 1

Figure 2(a)

Figure 2(b)

Figure 3(a

Figure 3(b)

Z

X          Y

Y          X

Figure 4

G3

G2

L

G1          T

Figure 5

Figure 6

Figure 7

Display or
I/O Device 89

User
91

Processing
Unit 88

Storage
Unit 87

90

86

84

80

82

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5960371 A
- US 20050192753 A1
- US 6266661 B
- US 20030165256 A1
- US 5299128 A
- US 3069654 A

### Non-patent literature cited in the description

- **S.M. SMITH ; J.M. BRADY.** Susan - a new approach to low level image processing. *International Journal of Computer Vision,* 1997, vol. 23 (1), 45-78
- **D.L. DONOHO ; X. HUO.** *Beamlets and Multiscale Image Analysis,* 2001, http://www-statstanford.edu/E;donoho/Reports/2001/BeamletMSIP051101.pdf
- **J.W. TUKEY.** Exploratory Data Analysis. Addison-Wesley, 1977
- **S.Z. LI.** Markov Random Field - Modeling in Computer Vision. Springer-Verlag, 1995
- Discontinuity-Adaptively Model and Robust Estimation